# EUROPÄISCHE PATENTSCHRIFT

(11) **EP 3 141 163 B1**
(45) Veröffentlichungstag und Bekanntmachung des Hinweises auf die Patenterteilung: **21.08.2019**
(21) Anmeldenummer: 16175391.8
(22) Anmeldetag: 21.06.2016
(51) Int. Cl.: A47J 31/36

(54) **GETRÄNKEZUBEREITUNGSVORRICHTUNG, SYSTEM SOWIE VERFAHREN**
BEVERAGE PREPARATION DEVICE, SYSTEM AND METHOD
DISPOSITIF DE PRÉPARATION DE BOISSONS, SYSTÈME ET PROCÉDÉ

(30) Priorität: 08.09.2015 DE 102015115073
(43) Veröffentlichungstag der Anmeldung: 15.03.2017
(73) Patentinhaber: Eugster/Frismag AG, 8580 Amriswil (CH)
(72) Erfinder: PEYROT, Pascal, 9402 Mörschwil (CH); RIESSBECK, Wolfgang, 8597 Landschlacht (CH); OBERHOLZER, Arnold, 9200 Gossau SG (CH); HÄRTEL, Lars, 79801 Hohentengen (DE)
(74) Vertreter: Patentanwälte Behrmann Wagner PartG mbB

(56) Entgegenhaltungen:
- EP-A1- 2 044 867
- EP-A2- 1 757 212
- EP-B1- 2 654 528
- WO-A1-2006/013124

## Beschreibung

Die Erfindung betrifft eine Getränkezubereitungsvorrichtung gemäß dem Oberbegriff des Anspruchs 1 zum Herstellen von Getränken aus Getränkesubstratkapseln, insbesondere Kaffeekapseln, mit einer Injektionseinrichtung zum Injizieren von Wasser in eine Getränkesubstratkapsel (zum Auslaugen und/oder Auflösen von in der Getränkesubstratkapsel befindlichem Getränkesubstrat, beispielsweise Granulat, Sirup, Teeblätter oder Kaffeemehl) zur Getränkeerzeugung und mit Wasserversorgungsmitteln zum Versorgen der Injektionseinrichtung mit Wasser, insbesondere von Heizmitteln der Getränkezubereitungsvorrichtung erwärmtem Wasser oder von mit Kühlmitteln der Getränkezubereitungsvorrichtung gekühltem Wasser oder mit Wasser auf Umgebungstemperatur, wobei die Injektionseinrichtung ein erstes Injektionskammerteil aufweist, das, bevorzugt translatorisch, relativ zu einem, bevorzugt ortsfesten, zweiten Injektionskammerteil verstellbar ist, wobei das erste Injektionskammerteil eine Getränkekapselaufnahme aufweist, mit der diese gemeinsam zwischen einer Beladeposition und einer (davon beabstandeten) Endposition (entspricht bevorzugt der Injektionsposition, insbesondere der Brühposition der Getränkesubstratkapsel) verstellbar ist, und dass der Getränkekapselaufnahme zusammen mit dem ersten Injektionskammerteil (und der Getränkekapselaufnahme) verstellbare Positioniermittel zum definierten Positionieren einer in der Getränkekapselaufnahme aufgenommenen Getränkesubstratkapsel während der Verstellbewegung des ersten Injektionskammerteils) in Richtung Endposition zugeordnet sind, die als Federmittel ausgebildeten oder Federmittel umfassenden, bevorzugt als Kraftbeaufschlagungsmittel und/oder Formschlussmittel ausgebildeten, Positioniermittel derart ausgebildet und angeordnet sind, dass diese durch Einsetzen einer Getränkesubstratkapsel in die Getränkekapselaufnahme in der Beladeposition elastisch spannbar sind und die Getränkesubstratkapsel (3), insbesondere bis zum Erreichen der Endposition, formschlüssig halten und/oder federkraftbeaufschlagen, vorzugsweise klemmen. Zum Klemmen der Getränkesubstratkapsel sind die Positioniermittel bevorzugt als Klemmmittel zum klemmenden Halten der Getränkesubstratkapsel während des Verstellens ausgebildet. Für den bevorzugten Fall der Ausbildung der Positioniermittel als Formschlussmittel halten die Positioniermittel die Getränkesubstratkapsel bevorzugt während des Verstellens formschlüssig, ggf. kraftlos oder alternativ unter Kraftbeaufschlagung - in diesem Fall handelt es sich bei den Positioniermitteln gleichzeitig um Kraftbeaufschlagungsmittel. Die zusammen mit dem ersten Injektionskammerteil verstellbaren Positioniermittel sind zur Kraftbeaufschlagung der Getränkesubstratkapsel und/oder zum formschlüssigen Halten der Getränkesubstratkapsel, bevorzugt an dem ersten Injektionskammerteil relativ zu der Getränkesubstratkapsel verstellbar, insbesondere verformbar, durch unmittelbare Wechselwirkung mit der Getränkesubstratkapsel beim Einlegevorgang.

Ferner betrifft die Erfindung ein System mit einer Getränkezubereitungsvorrichtung sowie einer Getränkesubstratkapsel gemäß Anspruch 11 sowie ein Verfahren gemäß Anspruch 12 zum Betreiben einer Getränkezubereitungsvorrichtung.

Zum Verarbeiten starrer Getränkesubstratkapseln sind Getränkezubereitungsvorrichtungen mit sogenannter offener Injektionskammer bekannt geworden, in welchen die Getränkesubstratkapsel einen Bestandteil der Injektionskammer bildet bzw. benötigt wird, um diese gegenüber zwei einander gegenüberliegenden Injektionskammerteilen abzudichten. Hierzu stützen sich zwei relativ zueinander verstellbare Injektionskammerteile über jeweils eine Dichtung einander gegenüberliegend in einer Schließrelativposition bzw. Endposition eines Verstellwegs des ersten Injektionskammerteils an der Getränkesubstratkapsel ab und dichten somit einen Einlass- bzw. Injektionsbereich sowie einen gegenüberliegenden Auslassbereich von der Umgebung ab. Daneben sind sogenannte geschlossene Injektionskammersysteme bekannt, bei denen die Injektionskammerteile vollumfänglich in der Endposition gegeneinander abgedichtet sind.

Aus der EP 2 405 790 A1 ist eine Getränkezubereitungsvorrichtung bekannt geworden, bei welcher die Getränkesubstratkapsel über eine schräge Rutsche einem feststehenden Injektionskammerteil zugeführt wird, woraufhin die Injektionskammer mittels eines weiteren, gegenüberliegenden Injektionskammerteils verschlossen wird, welches hierfür translatorisch entlang einer Verstellachse auf das die Getränkesubstratkapsel aufweisende, ortsfeste Injektionskammerteil zu verstellt wird.

Bei bekannten Kapselmaschinen wird als nachteilig empfunden, dass eine Beladeposition, in der eine Getränkesubstratkapsel in der Regel manuell zugeführt wird, unmittelbar mit der Injektionsposition, insbesondere Brühposition, in der in die Getränkesubstratkapsel dann Wasser injiziert wird, um ein Getränk zu erzeugen, übereinstimmt, was die konstruktiven und funktionalen Möglichkeiten bekannter Getränkezubereitungsvorrichtungen (Kapselmaschinen) beschränkt. Es besteht der Wunsch nach einem Auseinanderfallen einer Beladeposition zum, insbesondere manuellen, Beladen eines Injektionskammerteils und der eigentlichen Injektionsposition, insbesondere Brühposition. Solche Vorrichtungen hätten jedoch den prinzipbedingten Nachteil, dass es bei nicht korrekt eingesetzter Getränkesubstratkapsel und/oder einem Verrutschen der Getränkesubstratkapsel bei einer Verstellbewegung zu Problemen kommen kann, insbesondere zu einem Verkanten der Getränkesubstratkapsel während einer Verstellbewegung, wodurch ein Weiterverstellen der Getränkesubstratkapsel blockiert wird.

Aus der EP 2 717 748 B1 ist eine Getränkezubereitungsvorrichtung zum Herstellen von Getränken aus Getränkesubstratkapseln bekannt. Während des Transportes der Getränkesubstratkapsel auf einen Injektionskammerteil in Richtung eines ortsfesten zweiten Injektionskammerteils wird die Getränkesubstratkapsel gehalten, in dem zwei mit Hilfe von Federn von der Getränkesubstratkapsel weg federkraftbeaufschlagte Arme entlang von Rampen bewegt und so auf die Getränkesubstratkapsel zuverstellt werden. Beim Einsetzen der Getränkesubstratkapsel besteht die Gefahr eines Zurückfederns und/oder einer nicht korrekten Positionierung.

Die EP 2 044 867 A1, die WO 2006/013124 A1 sowie die EP 2 654 528 B1 beschreiben sogenannte Kapselmaschinen, bei denen die Kapsel über komplexe Hebelmechanismen nach dem Einwurf positioniert wird.

Zum weiteren Stand der Technik wird auf die DE 10 2009 049 945 A1 und die WO 2005/ 058 111 A1 verwiesen.

Ausgehend von dem vorgenannten Stand der Technik liegt der Erfindung daher die Aufgabe zugrunde, eine kapselbasierte Getränkezubereitungsvorrichtung anzugeben, bei der Beladeposition und Injektionsposition, insbesondere Brühposition (Endposition), insbesondere entlang einer Verstellachse, auseinanderfallen und trotzdem ein störungsfreier Betrieb sichergestellt ist - insbesondere soll ein Verkanten einer Getränkesubstratkapsel in der Getränkezubereitungsvorrichtung auf den Weg in die Endposition zumindest weitgehend vermieden werden, um einen störungsfreien Ablauf bzw. eine komfortable und störungsfreie Bedienung zu ermöglichen. Ferner besteht die Aufgabe darin, ein entsprechendes System, umfassend neben einer erfindungsgemäßen Getränkezubereitungsvorrichtung mindestens eine Getränkesubstratkapsel anzugeben sowie ein Betriebsverfahren für eine erfindungsgemäße Getränkezuberreitungsvorrichtung (Kapselmaschine).

Hinsichtlich des Systems wird die Aufgabe mit den Merkmalen des Anspruchs 11 und hinsichtlich des Verfahrens mit den Merkmalen des Anspruchs 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, bei einer als sogenannte Kapselmaschine ausgebildeten Getränkezubereitungsvorrichtung dem ersten manuell und/oder motorisch verstellbaren ersten Injektionskammerteil eine Getränkekapselaufnahme zuzuordnen, zusammen mit der das erste Injektionskammerteil zwischen einer Beladeposition, in der die Getränkekapselaufnahme und somit das erste Injektionskammerteil mit einer Getränkesubstratkapsel beladen werden kann und einer Endposition (Injektionsposition) verstellbar ist, in der durch Injektion in an sich bekannter Weise ein Getränk herstellbar ist. Um nun Probleme, insbesondere ein Verkanten der Getränkesubstratkapsel, während des Verstellens des ersten Injektionskammerteils bzw. einer daran angeordneten Getränkesubstratkapsel auf dem vorerwähnten Verstellweg zu vermeiden, sind erfindungsgemäß der Getränkekapselaufnahme zusammen mit dem ersten Injektionskammerteil sowie bevorzugt relativ zu der Getränkesubstratkapsel, bevorzugt durch elastisches Verformen verstellbare, zumindest abschnittsweise federnde, besonders bevorzugt als Kraftbeaufschlagungsmittel ausgebildete, Positioniermittel zugeordnet, die derart ausgebildet und angeordnet sind, dass mit diesen die Getränkesubstratkapsel, zumindest während eines Zeitabschnitts der Verstellbewegung, insbesondere über den größten Zeitabschnitt der Verstellbewegung, ganz besonders bevorzugt während der gesamten Verstellbewegung definiert positionierbar ist, so dass zum einen sichergestellt ist, dass die Getränkesubstratkapsel auf ihrem Weg in die Endposition nicht verkanten kann und bevorzugt darüber hinaus bereits so relativ zu dem zweiten, insbesondere ortsfesten Injektionskammerteil ausgerichtet ist bzw. wird, dass durch Verstellen des ersten Injektionskammerteils in die Endposition die Getränkesubstratkapsel eine exakte Injektionsposition zu beiden Injektionskammerteilen einnehmen kann. Besonders bevorzugt ist es, wenn die Positioniermittel derart ausgebildet sind, dass sie die Getränkesubstratkapsel durch mittelbare und/oder unmittelbare Kraftbeaufschlagung, insbesondere Federkraftbeaufschlagung relativ zu dem ersten Injektionskammerteil und vorzugsweise dadurch auch relativ zu dem zweiten Injektionskammerteil definiert positionieren. Besonders zweckmäßig ist es dabei, wenn die Beaufschlagungsmittel dabei derart ausgebildet sind, dass sie die Getränkesubstratkapsel, insbesondere federnd bzw. durch Klemmen positionieren, bevorzugt fixieren, bevorzugt durch Klemmen. Auch ist eine Ausführungsform realsierbar, bei der die Positioniermittel als Formschlussmittel ausgebildet sind, also derart, dass sie die Getränkesubstratkapsel durch zumindest abschnittsweise formschlüssiges Umschließen halten bzw. fixieren, dass also die Positioniermittel in eine Positionierposition verstellbar sind, in der die Getränkesubstratkapsel von den Positioniermitteln sicher gehalten wird. Dabei kann gemäß einer ersten Ausführungsvariante der Formschluss kraftlos erfolgen, also derart, dass die Positioniermittel in ihrer Positionierposition die Getränkesubstratkapsel mit geringem Spiel umschließen oder derart, dass zusätzlich zu dem Formschluss eine Kraftbeaufschlagung erfolgt - zu diesem Zweck stützen sich bei dieser Ausführungsvariante die Positioniermittel dann, insbesondere federnd an der Getränkesubstratkapsel ab. Besonders bevorzugt ist eine Kombination von Form- und Kraftschluss (insbesondere federnder Kraftschluss), wobei Form- und Kraftschluss, wie erläutert, auch als Alternativen realisierbar sind. Ein Formschluss kann beispielsweise durch die erfindungsgemäße Ausgestaltung hergestellt werden, wonach die Positioniermittel Federmittel umfassen, die, durch Einlegen der Getränkesubstratkapsel spannbar sind. Die Federmittel können dann bei entsprechender Ausgestaltung und Anordnung die Getränkesubstratkapsel formschlüssig zwischen sich aufnehmen, entweder unter Federkraftbeaufschlagung oder kraftlos. Bei der alternativen kraftlosen formschlüssigen Halterung können die Federmittel bei in dem ersten Injektionskammerteil aufgenommener Getränkesubstratkapsel wieder entspannt werden, d. h. vollständig zurückfedern und die Getränkesubstratkapsel, insbesondere mit minimalem Spiel, zumindest abschnittsweise umschließen.

Bevorzugt wird dabei die Getränkesubstratkapsel derart positioniert, dass eine Längsmittelachse der Getränkesubstratkapsel, die sich senkrecht erstreckt zu einer Boden- und einer Deckenfläche der Getränkesubstratkapsel zusammenfällt mit bzw. parallelisiert wird zu einer Verstellachse des ersten Injektionskammerteils.

Im Hinblick auf die konkrete Ausbildung und Anordnung der Positioniermittel gibt es unterschiedliche Möglichkeiten - wesentlich ist, dass die Positioniermittel gemeinsam mit dem ersten Injektionskammerteil verstellbar angeordnet sind. Die Wechselwirkung der Positioniermittel mit der Getränkesubstratkapsel zum kraftbeaufschlagenden, insbesondere federkraftbeaufschlagenden Halten und/oder zum formschlüssigen, ggf. kraftlosen Halten erfolgt bevorzugt durch eine Verstellbewegung, insbesondere Verformung der Positioniermittel relativ zu der Getränkesubstratkapsel, wobei diese Bewegung beispielsweise durch den Einlegevorgang durch die Wechselwirkung der Getränkesubstratkapsel mit den Positioniermitteln selbst aktuiert sein bzw. werden kann und/oder durch Wechselwirkung der Positioniermittel mit ortsfesten Wechselwirkungsmitteln beim Verstellen des ersten Injektionskammerteils entlang einer Verstellachse, wie später noch erläutert werden wird.

Erfindungsgemäß sind die Positioniermittel derart ausgebildet und angeordnet, dass diese durch den Einlegevorgang, d.h. das bevorzugt manuelle oder alternativ automatisierte Positionieren der Getränkesubstratkapsel in der Getränkekapselaufnahme, gespannt, d.h. elastisch bzw. federnd ausgelenkt werden und dadurch die Getränkesubstratkapsel bereits unmittelbar in der Beladeposition federkraftbeaufschlagen bzw. klemmen und/oder formschlüssig halten.

Gegebenenfalls erfolgt ein Verstellen der Kraftbeaufschlagungsmittel, insbesondere zum klemmenden und/oder formschlüssigen Positionieren der Getränkesubstratkapsel durch das Verstellen des ersten Injektionskammerteils in Richtung des zweiten Injektionskammerteils durch eine Wechselwirkung der zusammen mit dem ersten Injektionskammerteil verstellbaren, erfindungsgemäß federnden Positioniermittel mit ortsfesten Wechselwirkungsmitteln - anders ausgedrückt werden die Positioniermittel durch Verstellen des ersten Injektionskammerteils entlang von Wechselwirkungsmitteln sowie relativ zu der Getränkesubstratkapsel verstellt und dadurch, insbesondere in Richtung Getränkesubstratkapsel, kraftbeaufschlagt, so dass die Positioniermittel wiederum die Getränkesubstratkapsel mittelbar oder unmittelbar kraftbeaufschlagen, insbesondere federkraftbeaufschlagen und/oder formschlüssig, ggf. kraftlos, halten.

Dabei erfolgt bereits ein Teilverspannen von Federmitteln der Positioniermittel durch den Einlegevorgang und ein weiteres (festeres) Spannen durch Kraftbeaufschlagung aufgrund der Wechselwirkung mit den Wechselwirkungsmitteln durch die Verstellbewegung des ersten Injektionskammerteils zusammen mit den Positioniermittel in Richtung Endposition.

Grundsätzlich ist es möglich, dass die Getränkekapselaufnahme von den Positioniermittel, bevorzugt von den Federmitteln der Positioniermittel zum Positionieren der Getränkesubstratkapsel gebildet wird, in einer bevorzugten Ausführungsform ausschließlich von diesen Positioniermitteln - diese Variante ist bei der erfindungsgemäßen Ausgestaltung bevorzugt, gemäß derer Federmittel der Positioniermittel derart ausgestaltet sind, dass diese, wie erläutert, durch Einlegen der Getränkesubstratkapsel vorspannbar sind, um die Getränkesubstratkapsel durch Federkraftbeaufschlagung oder Formschluss (mit gleichzeitiger Federkraftbeaufschlagung oder alternativ kraftlos) zu halten. Im einfachsten Fall handelt es sich bei der Getränkekapselaufnahme um eine einfache elastische oder starre Aufnahmefläche, ggf. mit seitlicher Begrenzung; es muss sich jedoch wie erläutert nicht zwingend um ein von den Positioniermitteln separates Bauteil handeln. Für den Fall der Realisierung einer von den Positioniermitteln separaten Anlagefläche ist es bevorzugt, wenn die Getränkesubstratkapsel gegen diese von den Positioniermitteln kraftbeaufschlagbar und die Getränkesubstratkapsel dadurch klemmbar ist.

Erfindungsgemäß ist vorgesehen, dass die Positioniermittel als Federmittel ausgebildet sind oder solche umfassen; die Positioniermittel sind also vorzugsweise derart ausgestaltet, dass die Getränkekapselaufnahme zum Positionieren mit einer Federkraft beaufschlagbar ist und/oder die Federmittel ein formschlüssiges Halten (mit oder ohne Federkraftbeaufschlagung) ermöglichen. Hierzu können Federmittel der Positioniermittel unmittelbar auf dem ersten Injektionskammerteil angeordnet und mit diesem verstellbar sein zur mittelbaren oder unmittelbaren Federkraftbeaufschlagung und/oder formschlüssigen Halterung der Getränkesubstratkapsel. Es ist denkbar, insbesondere für den Fall der Realisierung der vorerwähnten ortsfesten Wechselwirkungsmittel diese auszugestalten und die eigentlichen Positioniermittel, ebenfalls federnd bzw. elastisch.

Die erfindungsgemäße Ausgestaltung der Getränkezubereitungsvorrichtung hat insbesondere Vorteile, wenn die Getränkezubereitungsvorrichtung in Weiterbildung der Erfindung mit sogenannter offener Injektionskammer ausgestaltet ist, bei der die Getränkesubstratkapsel also einen Bestandteil der Injektionskammer bildet und die beiden Injektionskammerteile in der Endposition des ersten Injektionskammerteils, insbesondere an beiden einander gegenüberliegenden Stirnseiten der Getränkesubstratkapsel, dichtend anliegen und bevorzugt selbst nicht vollumfänglich gegeneinander abgedichtet sind, sondern insbesondere einen oberen Abstand (Öffnung) zwischen einander freilassen. Gerade bei solchen Getränkezubereitungsvorrichtungen mit offener Injektionskammer wäre eine, insbesondere rein translatorische, alternativ auch rotatorische oder kombiniert translatorische und rotatorische Verstellbewegung der Getränkesubstratkapsel auf dem Weg in die Endposition bezogen auf die Positionierung der Getränkesubstratkapsel vergleichsweise undefiniert. Die Erfindung ist jedoch nicht auf eine Getränkezubereitungsvorrichtung mit offener Injektionskammer beschränkt - das erfindungsgemäße Vorsehen von mit dem ersten Injektionskammerteil verstellbaren Kraftbeaufschlagungsmitteln ist auch bei einer weiterbildungsgemäßen Ausführung der Getränkezubereitungsvorrichtung mit in der Endposition geschlossener Injektionskammer realisierbar, also bei einer Ausführungsvariante, bei der das erste und das zweite Injektionskammerteil vollumfänglich gegeneinander abgedichtet sind und die Getränkesubstratkapsel vollumfänglich von der Kombination aus erstem und zweitem Injektionskammerteil in der Endposition (Injektionsposition) umschlossen ist.

Ein wesentlicher Vorteil der zuvor bereits erläuterten erfindungsgemäßen Ausführungsform, bei der Federmittel der Positioniermittel bereits durch den Einlegevorgang der Getränkesubstratkapsel vorgespannt werden, um die Getränkesubstratkapsel federkraftzubelasten oder nach einem Entspannen rein formschlüssig zu halten besteht darin, dass ein Herausspringen einer Getränkesubstratkapsel aus der Getränkeaufnahme sich beim bzw. nach dem Einlegevorgang sicher verhindert wird. Ein solches Problem könnte insbesondere bei dem vergleichsweise starren und damit zurückfedernden Getränkesubstratkapseln für die erläuterten, offenen Injektionskammern auftreten.

Bevorzugt erfolgt das Beladen der Getränkekapselaufnahme in der Beladeposition des ersten Injektionskammerteils aus einer Richtung von oben, also derart, dass die Getränkesubstratkapsel, insbesondere translatorisch entlang einer Vertikalachse in die Getränkekapselaufnahme einführbar ist. Bevorzugt ist es, wenn die Getränkesubstratkapsel in der Endposition des ersten Injektionskammerteils bzw. in ihrer Injektionsposition oder im Bereich der Endposition bzw. Injektionsposition, bevorzugt translatorisch entlang der Vertikalachse, auswerfbar ist.

Besonders bevorzugt ist es, wenn die Getränkezubereitungsvorrichtung Rückhaltemittel aufweist, mit denen die Getränkesubstratkapsel bei einer Zurückbewegung des ersten Injektionskammerteils (zusammen mit der Getränkekapselaufnahme) in Richtung seiner Beladeposition zurückhaltbar ist, wobei es ganz besonders bevorzugt ist, wenn diese Rückhaltemittel im Bereich der Endposition des ersten Injektionskammerteils bzw. der Injektionsposition der Getränkesubstratkapsel angeordnet sind. Anders ausgedrückt sind in Weiterbildung der Erfindung Rückhaltemittel vorgesehen, gegen die die Getränkesubstratkapsel beim Zurückverstellen des Injektionskammerteils in die Beladeposition verstellbar ist, so dass die Rückhaltemittel quasi die Getränkesubstratkapsel aus der Getränkekapselaufnahme herausziehen und bevorzugt die Getränkesubstratkapsel beim Zurückhalten aus dem Eingriff der zusammen mit dem ersten Injektionskammerteil verstellbaren Rückhaltefedermittel befreien. Besonders zweckmäßig dabei ist es, wenn es sich bei den Rückhaltemitteln um stationäre, d.h. ortsfeste Rückhaltefederelemente handelt.

Das Merkmal der bevorzugten Anordnung der Rückhaltemittel im Bereich der Endposition des ersten Injektionskammerteils ist so zu verstehen, dass gemäß einer bevorzugten Ausführungsform die Rückhaltemittel bereits rückhaltend in der Injektionsposition oder zumindest näherungsweise der Injektionsposition der Getränkesubstratkapsel mit der Getränkesubstratkapsel zusammenwirken bzw. wechselwirken, dass also die Getränkesubstratkapsel nicht erst über eine größere Strecke aus der Endposition mit dem ersten Injektionskammerteil zurückbewegt werden muss.

Hierdurch kann die Getränkesubstratkapsel in ihrer Injektionsposition oder zumindest unmittelbar benachbart zur Injektionsposition ausgeworfen werden bzw. kann dort durch eine, vorzugsweise untere, Auswurföffnung herausfallen, entweder rein schwerkraftbedingt oder kraftunterstützt, insbesondere mittels eines Antriebs, beispielsweise eines Motors oder einer Feder, die bevorzugt durch den Schließvorgang der Injektionskammer vorspannbar ist. Besonders bevorzugt ist es, wenn die Getränkesubstratkapsel zur zurückhaltenden Wechselwirkung mit den Rückhaltemitteln weniger als 2 cm, vorzugsweise weniger als 1 cm, noch weiter bevorzugt weniger als 0,5 cm, insbesondere zwischen 0 und 3 mm, bevorzugt zwischen 0,05 und 3 mm zurück in Richtung Beladeposition verstellt werden muss, bevor die Rückhaltemittel greifen und die Getränkesubstratkapsel zurückhalten, die dann nach Herausbewegen des ersten Injektionskammerteils nach unten herausfallen kann.

Ganz besonders zweckmäßig ist es nun, wenn die Rückhaltemittel mindestens ein Rückhaltefederelement, vorzugsweise zwei beabstandete, insbesondere einander gegenüberliegende und noch weiter bevorzugt spiegelsymmetrisch ausgebildete und/oder angeordnete Rückhaltefederelemente umfassen, wobei das mindestens eine Rückhaltefederelement, insbesondere die mehreren Rückhaltefederelemente derart ausgebildet und angeordnet ist/sind, dass dieses/diese durch Verstellen des ersten Injektionskammerteils zusammen mit der Getränkesubstratkapsel aus der Beladeposition in Richtung der Endposition vor Erreichen der Endposition elastisch, insbesondere bezogen auf eine Verstellachse in radialer Richtung nach außen, auslenkbar ist/sind und nach Passieren zumindest eines Abschnitts der Getränkesubstratkapsel zurückfederbar ist/sind, insbesondere hinter einen Radialvorsprung, vorzugsweise einen, bevorzugt deckelseitigen Umfangsbund der Getränkesubstratkapsel jedenfalls derart, dass bei einer Zurückbewegung des ersten Injektionskammerteils in die Beladeposition die Getränkesubstratkapsel von dem ersten Injektionskammerteil durch Anstoßen an dem mindestens einen Rückhaltefederelement abgestriffen wird bzw. abstreifbar ist.

Als besonders zweckmäßig hat es sich herausgestellt, wenn das mindestens eine Rückhaltefederelement Bestandteil eines Stanzbiegeteils, insbesondere eines Bleches, ist, insbesondere in Form einer Ausklinkung aus diesem Blech, wobei sich noch weiter bevorzugt das Blech in Richtung der später noch zu erläuternden, bevorzugt translatorischen Verstellachse des ersten Injektionskammerteils erstreckt und die Ausklinkung nach radial innen in Richtung Getränkesubstratkapsel weist.

Wie eingangs erläutert, ist erfindungsgemäß vorgesehen, dass die Positioniermittel, insbesondere die Federmittel der Positioniermittel derart ausgebildet und angeordnet sind, dass diese durch den Belade- bzw. Einsetzvorgang der in der Beladeposition befindliche Getränkekapselaufnahme elastisch spannbar sind, insbesondere bis zum Erreichen der Endposition (und bevorzugt auch noch in der Endposition), bevorzugt formschlüssig, klemmen. Dabei können die Federmittel die Getränkesubstratkapsel gegen ein feststehendes Bauteil, insbesondere eine Getränkekapselaufnahmefläche kraftbeaufschlagen und/oder aus verschiedenen Richtungen, zumindest abschnittsweise, gegen Federelemente der Federmittel. Besonders bevorzugt beaufschlagen die Federmittel die Getränkekapselaufnahme mantelseitig, d.h. auf einem Mantelabschnitt der Getränkesubstratkapsel von radial außen. Besonders bevorzugt liegen die Kraftbeaufschlagungsmittel im gespannten Zustand unmittelbar am Außenumfang, insbesondere an einem Mantel der Getränkesubstratkapsel, an. Der Mantel kann zumindest näherungsweise zylinderförmig ausgestaltet sein oder alternativ beispielsweise einen Konuswinkel in einem Bereich zwischen Deckel und einer Bodenseite der Getränkesubstratkapsel aufweisen. Alternativ ist es möglich, dass die Federmittel nach deren Spannen, insbesondere durch einen Einlegevorgang der Getränkesubstratkapsel, wieder entspannen und die Getränkesubstratkapsel kraftlos und formschlüssig halten, was durch die Realisierung eines geringen Spiels zwischen den (entspannten) Federmitteln und der Getränkesubstratkapsel realisierbar ist.

Auch ist es möglich, die Kraftbeaufschlagungsmittel derart auszubilden und relativ zu Wechselwirkungsmitteln der Getränkezubereitungsvorrichtung anzuordnen, dass die Federmittel mittelbar oder unmittelbar bei dem Verstellen des ersten Injektionskammerteils aus der Beladeposition in Richtung Endposition mit den Wechselwirkungsmitteln in Kontakt kommen und die Kraftbeaufschlagungsmittel dadurch, mittelbar oder unmittelbar, die Getränkesubstratkapsel kraftbeaufschlagen, insbesondere federkraftbeaufschlagen, und dadurch klemmend halten und positionieren. Eine solche Ausführungsform kann mit der zuvor beschriebenen Ausführungsform einer Klemmung durch den Einlegevorgang kombiniert werden. Dabei ist es möglich, dass die Federmittel durch Wechselwirkung mit den Wechselwirkungsmitteln so relativ zu der Getränkesubstratkapsel verstellt bzw. positioniert werden, dass die Getränkesubstratkapsel formschlüssig, jedoch kraftlos gehalten wird. Vorstehend erwähnte Rampe kann auch dazu genutzt werden, die Federspannung zu erhöhen, mit dem Ziel, die Feder näher an die Getränkesubstratkapsel heranzubringen, um diese formschlüssig, ggf. kraftlos zu halten.

Besonders bevorzugt ist es hierzu, wenn die Wechselwirkungsmittel und/oder die Positioniermittel eine Anlaufschräge aufweisen, so dass die Kraftbeaufschlagung der Getränkesubstratkapsel durch die Kraftbeaufschlagungsmittel, insbesondere eine Federspannung mit zunehmendem zurückgelegten Weg in Richtung Beladeposition zunimmt oder anders ausgedrückt, dass im Bereich einer Rampenwechselwirkung die auf die Getränkesubstratkapsel wirkende Kraft, insbesondere Klemmkraft, bevorzugt Federkraft zunimmt. Dabei ist es grundsätzlich auch möglich, eine abnehmende Kraft, insbesondere Federkraft im Bereich der Endposition zu realisieren, um somit ein erleichtertes Rückhalten der Getränkesubstratkapsel mit den erläuterten Rückhaltemitteln zu gewährleisten.

Wie eingangs bereits angedeutet, ist es auch bei einer Ausführungsform mit Wechselwirkungsmitteln für die Kraftbeaufschlagungsmittel möglich und bevorzugt, wenn letztere Federmittel umfassen oder als solche ausgebildet sind, wobei die Positioniermittel mindestens ein mit dem ersten Injektionskammerteil verstellbares Federelement umfassen, welches durch die Wechselwirkung mit den stationären Wechselwirkungsmitteln gespannt wird und somit die Getränkesubstratkapsel kraftbeaufschlagt bzw. federkraftbeaufschlagt und besonders bevorzugt klemmt, oder formschlüssig hält (entweder mit Federkraftbeaufschlagung der Getränkesubstratkapsel oder kraftlos). Auch ist es denkbar - unabhängig von der konkreten Ausgestaltung der eigentlichen Positioniermittel des ersten Injektionskammerteils die Wechselwirkungsmittel federnd auszubilden (alternativ starr).

Erfindungsgemäß umfassen die Positioniermittel Federmittel, die mindestens ein, bevorzugt metallisches, ein- oder mehrteiliges Federelement aufweisen, welches ganz besonders bevorzugt als Stanzbiegeteil ausgebildet ist. Zusätzlich oder alternativ zu dem Vorsehen eines metallischen Federelementes ist es möglich mindestens ein, ein- oder mehrteiliges Federelement aus Kunststoff, d. h. ein Kunststoffformteil, insbesondere ein Kunststoffspritzgussteil einzusetzen. Das Federelement aus Kunststoff oder Metall weist erfindungsgemäß einen gekrümmten Abstand, insbesondere beabstandet zu den jeweiligen, am weitesten voneinander abgewandten Enden des Federelementes angeordneten gekrümmten Aufnahmeabschnitt auf zur zentrierenden Anlage an der und/oder zum formschlüssigen, abschnittsweisen Umschließen der Getränkesubstratkapsel, insbesondere in einem Mantelbereich. Ganz besonders bevorzugt sind mehrere solcher Federelemente vorgesehen, insbesondere zwei Federelemente, die noch weiter bevorzugt spiegelsymmetrisch ausgebildet und/oder angeordnet sind, insbesondere um die Getränkesubstratkapsel zwischen sich zu klemmen oder alternativ kraftlos formschlüssig zu halten. Besonders bevorzugt bilden solche Federelemente auch die Getränkekapselaufnahme oder beaufschlagen alternativ die Getränkesubstratkapsel mit einer Federkraft gegen eine dann von den Federelementen separate Getränkekapselaufnahme oder bilden wieder alternativ zusammen mit der separaten Kapselaufnahme einen kraftlosen Formschluss mit der Getränkesubstratkapsel.

Für den bevorzugten Fall des Vorsehens mindestens eines Federelementes als Kunststoffformteil ist es bevorzugt, wenn dieses Federelement zwei einander gegenüberliegende federnde Abschnitte aufweist, zwischen denen die Getränkesubstratkapsel aufgenommen werden kann und/oder die beim Einsetzen der Getränkesubstratkapsel elastisch, insbesondere nach radial außen aufgeweitet bzw. elastisch ausgelenkt werden bzw. auslenkbar sind. Für den bevorzugten Fall der Ausbildung der Federelemente aus Kunststoff sind diese bevorzugt einteilig bzw. monolithisch ausgebildet und zwar besonders bevorzugt an einem Verbindungsabschnitt, der in den ersten Injektionskammerteil unterhalb der Getränkesubstratkapsel angeordnet ist. An diesem Verbindungsabschnitt sind die Federelemente jeweils bevorzugt mit ihrem festen, insbesondere unteren Ende angeordnet, d. h. bevorzugt monologisch verbunden während es sich bei dem gegenüberliegenden, maximal auslenkbaren Ende jeweils um ein freies Ende handelt.

Bevorzugt ist das mindestens eine Federelement derart angeordnet, dass einem Ende ein Festlager zugeordnet ist, dass also das Federelement auf einer Seite, insbesondere auf einer unteren Seite, fixiert oder fest angeordnet ist und das in Richtung der Längserstreckung des Federelementes beabstandete, gegenüberliegende bevorzugt entlang einer Vertikalen obere, Ende als freies Ende ausgebildet ist, welches, insbesondere senkrecht zur Längserstreckung einer Verstellachse des ersten Injektionskammerteils, bevorzugt elastisch, auslenkbar ist, insbesondere durch Beladen der Getränkekapselaufnahme in der Beladeposition, wobei dem freien Ende mindestens ein die Auslenkbewegung begrenzender Anschlag zugeordnet ist. Besonders zweckmäßig ist es, wenn zwei einander gegenüberliegende Anschläge vorgesehen sind, um die Auslenkbewegung in zwei einander entgegengesetzte Richtungen zu begrenzen. Für den Fall des Vorsehens eines Anschlages für ein Federelement ist es bevorzugt, wenn dieses die elastische Auslenkbewegung beim Einsetzen der Getränkesubstratkapsel begrenzend angeordnet ist.

Besonders zweckmäßig ist eine Ausführungsform der Getränkezubereitungsvorrichtung, bei der das erste Injektionskammerteil mit seiner Getränkekapselaufnahme, bevorzugt rein translatorisch entlang der Verstellachse zwischen der Beladeposition und der Endposition, verstellbar ist, insbesondere über eine Zwischenposition.

Weiter bevorzugt ist es, wenn die Injektionskammer, insbesondere das erste Injektionskammerteil, verriegelbar ist, um dieses gegen ein ungewolltes Öffnen bzw. eine ungewollte Zurückverstellung in Richtung Beladeposition aus der Endposition heraus durch die Wasserinjektion und der damit verbundenen Druckbeaufschlagung zu sichern. Ganz besonders bevorzugt ist es, wenn die Verriegelungsmittel derart ausgestaltet sind, dass eine Verriegelung erst ab Erreichen der Zwischenposition möglich ist, insbesondere derart, dass der erste Injektionskammerteil durch den Verriegelungsvorgang als solches, insbesondere durch Verdrehen von entsprechenden Betätigungsmitteln in einer Umfangsrichtung, bevorzugt translatorisch, aus der Zwischenposition in die Endposition verstellbar ist.

Bei Bedarf können zusätzlich zu den zusammen mit dem ersten Injektorkammerteil sowie vorzugsweise auch relativ zur Substratkapsel, verstellbaren Positioniermitteln stationäre bzw. ortsfest angeordnete Positioniermittel vorgesehen sein, die derart federnd ausgebildet und angeordnet sind, dass sie durch Verstellen des ersten Injektionskammerteils mit einer in der Getränkekapselaufnahme aufgenommenen Getränkesubstratkapsel auf ihren Weg von der Beladeposition in Richtung der Endposition elastisch auslenkbar sind. Bevorzugt ist es dabei, wenn die ortsfest angeordneten, federnden Positioniermittel derart ausgebildet und angeordnet sind, dass sie ein Herauskippen einer in der Getränkekapselaufnahme aufnehmbaren Getränksubstratkapsel aus der Getränkekapselaufnahme bei in der Beladeposition befindlichem ersten Injektorkammerteil und/oder während der Verstellbewegung in Richtung Endposition verhindern. Besonders zweckmäßig ist es hierzu, wenn die stationären Positioniermittel mindestens einen, sich vorzugsweise entlang des Verstellweges des ersten Injektionskammerteils, erstreckenden, federnden Arm aufweisen, dessen freies Ende in Richtung der Beladeposition orientiert ist. Besonders zweckmäßig ist das Vorsehen dieser zusätzlichen stationären bzw. ortsfesten Positioniermittel für den Fall, dass der Formschluss und/oder die Kraftbeaufschlagung der Getränkesubstratkapsel durch die (verstellbaren) in der Beladeposition noch nicht gegeben ist, sondern erst hergestellt wird durch das Verstellen des ersten Injektionskammerteils und die Wechselwirkung der Positioniermittel mit den ortsfesten Positioniermitteln, wobei die ortsfesten Positioniermittel auch bei der alternativen Ausführungsform realisierbar sind, bei welcher die Positioniermittel bereits bei in der Beladeposition befindlichem ersten Injektionskammerteil formschlüssig und/oder kraftbeaufschlagend mit der Getränkesubstratkapsel zusammenwirken.

Die Erfindung führt auch auf ein Verfahren zum Betreiben einer erfindungsgemäßen Getränkezubereitungsvorrichtung. Gemäß dem erfindungsgemäßen Verfahren wird zunächst eine Getränkesubstratkapsel in die Getränkekapselaufnahme bei in der Beladeposition befindlichem ersten Injektionskammerteil eingelegt. Je nach Ausgestaltung der Positioniermittel werden Federmittel der Positioniermittel bereits durch den Beladevorgang gespannt, insbesondere derart, dass sie die Getränkesubstratkapsel zwischen sich einspannen und/oder formschlüssig halten oder das Einlegen bzw. Beladen erfolgt kraftbeaufschlagungsfrei. Die Positioniermittel können dann, je nach Ausgestaltungsvariante, erst während der Verstellbewegung gegen die Getränkesubstratkapsel kraftbeaufschlagt und/oder auf diese zu verstellt werden durch Wechselwirkung mit Wechselwirkungsmittel oder eine bereits beim Beladen aufgebrachte Klemmkraftbeaufschlagung kann durch Wechselwirkung mit dann fakultativen Wechselwirkungsmitteln erhöht werden. Jedenfalls wird die Getränkesubstratkapsel mittels der Positioniermittel, zumindest während eines Zeitabschnitts, während des Verstellens des ersten Injektionskammerteils von der Beladeposition in die Endposition positioniert, insbesondere zentriert, insbesondere durch Federkraftbeaufschlagung durch die Federmittel der Positioniermittel und/oder durch formschlüssiges Halten und nach Erreichen der chen der Endposition wird Wasser in die Getränkesubstratkapsel injiziert. Erfindungsgemäß ist vorgesehen die Federmittel der Positioniermittel derart auszubilden und anzuordnen, dass die Positioniermittel durch das Einlegen der Getränkesubstratkapsel in der Beladeposition, bevorzugt in radialer Richtung bezogen auf einer Längsachse der Getränkesubstratkapsel und/oder bezogen auf eine Verstellachse des ersten Injektionskammerteils gespannt, d. h. elastisch ausgelenkt, werden.

Nach erfolgter Getränkeherstellung wird dann bevorzugt das erste Injektionskammerteil in Richtung Beladeposition zurückbewegt, wodurch in Weiterbildung der Erfindung die Getränkesubstratkapsel von Rückhaltemitteln zurückgehalten wird, insbesondere im Bereich der Endposition. Diese Rückhaltemittel werden bevorzugt bei der vorhergehenden Verstellbewegung der Getränkesubstratkapsel aus der Beladeposition in die Endposition elastisch ausgelenkt und verschwenken dann, zumindest ein Stück weit, zurück, derart, dass die Getränkesubstratkapsel bei einer Zurückbewegung des Injektionskammerteils sich an den Rückhaltemitteln abstützen kann, die somit eine Zurückbewegung der Getränkesubstratkapsel bis in die Beladeposition verhindern und die Getränkesubstratkapsel nach Herausbewegen der Getränkekapselaufnahme aus einem Bereich unterhalb der Getränkesubstratkapsel durch eine Auswurföffnung hindurch fallen kann.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 - 6b:: die Funktionsweise eines ersten Ausführungsbeispiels einer erfindungsgemäßen Getränkezubereitungsvorrichtung und
- Fig. 7 - 9:: ein alternatives Ausführungsbeispiel einer erfindungsgemäßen Getränkezubereitungsvorrichtung, bei der die Federmittel der Positioniermittel als Kunststoffformteil, hier als Kunststoffspritzgussteil bzw. Einlegeteil ausgebildet sind.

In den Figuren sind gleiche Elemente und Elemente mit der gleichen Funktion mit den gleichen Bezugszeichen gekennzeichnet.

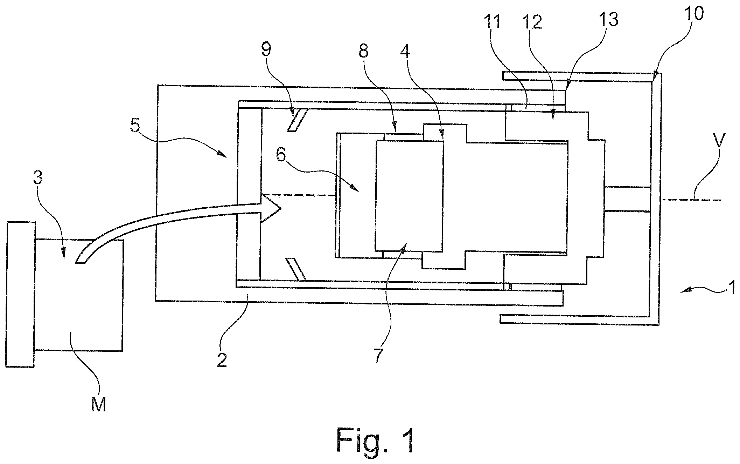

In Fig. 1 ist in einer geschnittenen Draufsicht ausschnittsweise eine als sogenannte Kapselmaschine ausgebildete Getränkezubereitungsvorrichtung 1 gezeigt.

Konkret gezeigt ist eine Injektionseinrichtung 2 der Getränkezubereitungsvorrichtung 1, in welcher Wasser in eine Getränkesubstratkapsel 3 injiziert werden kann.

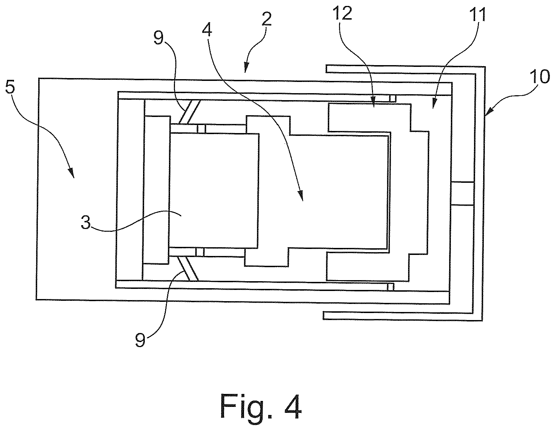

Die Injektionseinrichtung 2 umfasst ein, hier rein translatorisch verstellbares, erstes Injektionskammerteil 4, welches relativ zu einem zweiten, hier ortsfesten, Injektionskammerteil 5, hier beispielhaft rein translatorisch verstellbar ist, zwischen der in Fig. 1 gezeigten Beladeposition (Beladerelativposition) und der in Fig. 4 gezeigten Endposition (entspricht der Injektionsposition der Getränkesubstratkapsel 3), in der dann Wasser in die Getränkesubstratkapsel 3 injizierbar und ein fertiges Getränk aus der Getränkesubstratkapsel 3 ausleitbar ist.

Lediglich der Vollständigkeit halber sei erwähnt, dass aus Übersichtlichkeitsgründen in den Figuren die an sich bekannten, bevorzugt mindestens eine Pumpe umfassenden Wasserversorgungsmittel nicht gezeigt sind. Diese versorgen die Injektionseinrichtung, in dem konkreten Ausführungsbeispiel das zweite Injektionskammerteil 5 mit Wasser, insbesondere in der Getränkezubereitungsvorrichtung erwärmtes oder gekühltes Wasser, welches von einem Wassertank oder von einer Frischwasserzuleitung, insbesondere mithilfe der Pumpe, zur Injektionseinrichtung 2 in an sich bekannter Weise gefördert wird. Nicht gezeigt sind auch integrale Öffnungsmittel zum Öffnen der Getränkesubstratkapsel 3 beim Schließen der Injektionskammer, um das Wasser injizieren und fertiges Getränk wieder ausleiten zu können. Dieser Ausleitvorgang erfolgt bei dem konkreten Ausführungsbeispiel im Bereich des ersten Injektionskammerteils 4, welchem ein nicht gezeigter, beispielsweise zusammen mit dem ersten Injektionskammerteil 4 verstellbarer Auslauf zugeordnet ist.

In dem konkreten Ausführungsbeispiel handelt es sich um eine sogenannte offene Injektionseinrichtung 2, bei der die Injektionskammerteile 4, 5 nicht voll umfänglich dichtend aneinander anliegen, sondern die Getränkesubstratkapsel in der Endposition klemmend zwischen sich aufnehmen und gegenüber dieser abgedichtet sind, wobei dann insgesamt auf einer Oberseite eine freie Öffnung verbleibt. In einem unteren Bereich ist ein Dichtelement 6 vorgesehen, welches hier beispielhaft an dem ersten Injektionskammerteil 4 angeordnet ist und in der Endposition an dem zweiten Injektionskammerteil 5 dichtend anliegt, um ein unkontrolliertes Auslaufen von Spülmedium in einem Spülvorgang nach unten zu vermeiden - oben ist die Injektionskammer, wie erläutert, offen bzw. wird bei einer eingelegten Getränkesubstratkapsel 3 über diese abgedichtet, während bei einer alternativ realisierbaren Injektionseinrichtung 2 diese dadurch abgedichtet ist, dass die Injektionskammerteile 4, 5 vollumfänglich gegeneinander abgedichtet sind und die Getränkesubstratkapsel vollständig umschließen.

Vorliegend weist das erste Injektionskammerteil 4 eine abschnittsweise von der Dichtung 6 gebildete Getränkekapselaufnahme 7 auf, in die in der Beladeposition, insbesondere manuell, aus vertikaler Richtung von oben eine Getränkesubstratkapsel 3 eingelegt werden kann. Das erste Injektionskammerteil 4 weist zudem zusammen mit diesem verstellbare Federmittel umfassende als Kraftbeaufschlagungsmittel ausgebildete Positioniermittel 8 auf, die die Getränkesubstratkapselaufnahme 7, bevorzugt unter gleichzeitiger Realisierung eines Formschlusses, kraftbeaufschlagen und dadurch positionieren.

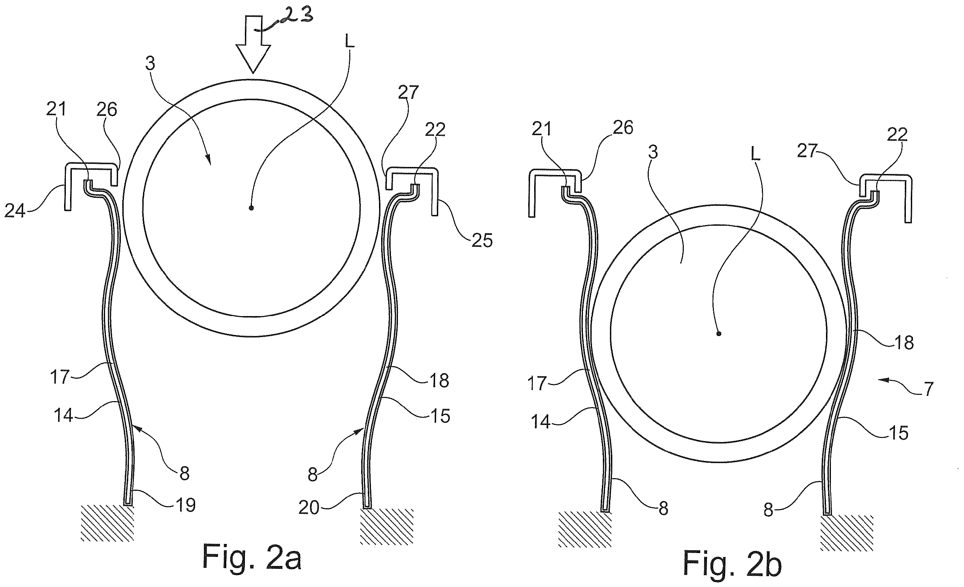

Im Folgenden wird anhand der Fig. 2a und 2b im Detail eine mögliche Ausgestaltungsvariante der Kraftbeaufschlagungsmittel erläutert, die selbst die Getränkekapselaufnahme bilden. Die Kraftbeaufschlagungsmittel dienen dazu, die Getränkesubstratkapsel relativ zum ersten Injektionskammerteil 4 zu positionieren bzw. mit einer Kraft, bevorzugt einer Federkraft zu beaufschlagen.

Nach erfolgtem Beladen des ersten Injektionskammerteils 4 mit der Getränkesubstratkapsel 3 wird, wie im Folgenden noch erläutert werden wird, das erste Injektionskammerteil 4, hier rein translatorisch, verstellt in Richtung auf das zweite Injektionskammerteil 5 zu. Dabei werden später noch zu erläuternde Rückhaltemittel 9 für die Getränkesubstratkapsel 3 passiert. Die hier beispielhaft und bevorzugt rein translatorische Verstellbewegung des Injektionskammerteils 4 wird hier beispielhaft manuell (alternativ elektromotorisch) aktuiert. Im konkreten Ausführungsbeispiel sind hierfür Betätigungsmittel 10 vorgesehen, die mit einer axialen Verstellkraft in Richtung des zweiten Injektionskammerteils 5 beaufschlagbar sind. Die Betätigungsmittel 10 durchgreifen in der Beladeposition ein ortsfestes Widerlager 11 mit einem Axialfortsatz 12.

Das Widerlager 11 ist, insbesondere lösbar, angeordnet zwischen zwei Führungsarmen 13 einer Rahmenkonstruktion, an der das zweite Injektionskammerteil 5 ausgebildet ist. Die Verstellbewegung ist so realisiert, dass zunächst eine Verstellung durch reine Axialkraftbeaufschlagung erfolgt. Ab Erreichen einer Zwischenposition sind die Axialfortsätze 12 durch das Widerlager 11 hindurchgeführt und stützen sich rückseitig, d.h. auf einer von dem zweiten Injektionskammerteil 5 abgewandten Seite, an dem Widerlager ab. Durch Verdrehen der Betätigungsmittel 10 verdrehen sich Schrägflächen rückwärtig an den Axialfortsätzen 12 sowie am Widerlager 11 gegeneinander, wodurch das erste Injektionskammerteil 4 weiter entlang der Verstellachse V aus der sich nahe bei der Endposition befindlichen Zwischenposition in die endgültige Endposition bewegt wird und gleichzeitig die Injektionskammer, genauer das ersten Injektionskammerteil, verriegelt bzw. gegen eine Zurückbewegung durch reine Axialkraftbeaufschlagung gesichert wird. Zum Zurückbewegen muss zunächst durch Zurückrotieren der Betätigungsmittel 10 eine Entriegelung erfolgen. Die zuvor beschriebene Verstellweise ist eine bevorzugte - hierauf ist die Erfindung jedoch nicht beschränkt; wesentlich ist es zunächst nur, dass das erste Injektionskammerteil 4, insbesondere translatorisch, jedoch nicht zwingend translatorisch, aus einer Beladeposition in eine Endposition relativ zu dem zweiten Injektionskammerteil 5 verstellt wird.

Anhand der Fig. 2a und 2b wird nun eine bevorzugte Ausführungsvariante der beispielhaft als Federmittel ausgebildeten Kraftbeaufschlagungsmittel 8 (Positioniermittel) beschrieben. In dem konkreten Ausführungsbeispiel sind die Federmittel der Positioniermittel 8 jedenfalls derart ausgebildet, dass diese durch den Einlegevorgang der Getränkesubstratkapsel 3 gespannt werden.

Wie sich aus den Fig. 2a und 2b ergibt, bilden die Positioniermittel 8 gleichzeitig die Getränkekapselaufnahme 7. Die Federmittel umfassen zwei spiegelsymmetrisch ausgebildete und angeordnete metallische, als Stanzbiegeteile ausgebildete Federelemente 14, 15, die spiegelsymmetrisch zu einer Spiegelebene angeordnet sind, die in dem konkreten Ausführungsbeispiel von einer vertikalen sowie von der Verstellachse V aufgespannt werden, wobei bevorzugt eine Längsmittelachse L der Getränkesubstratkapsel 3 mit der Verstellachse V im eingesetzten bzw. positionierten Zustand zusammenfällt.

Beide Federelemente 14, 15 sind in einem mittleren, gekrümmten Aufnahmeabschnitt 17, 18 konkav gewölbt, um sich von radial außen nach radial innen an einer Mantelfläche M (vergleiche Fig. 1) der Getränkesubstratkapsel federkraftbeaufschlagend abstützen zu können und die Getränkekapselaufnahme 7 zu bilden. Alternativ realisierbar ist auch eine Ausführungsform, bei der die Federelemente 14, 15 die Getränkesubstratkapsel 3 nach unten auf eine separate Getränkekapselaufnahme 7 federkraftbeaufschlagen.

Die in der Zeichnungsebene unteren Enden 19, 20 der bevorzugt, jedoch nicht zwingend metallischen bzw. als Federbleche ausgebildeten Federelemente 14, 15 sind als Festlager realisiert, während die einander gegenüberliegenden Enden als freie Enden 21, 22 ausgebildet sind, die in radialer Richtung nach außen bezogen auf die Längsmittelachse L bzw. die Verstellachse V durch Einlegen (Pfeil 23) der Getränkesubstratkapsel 3 in der Beladeposition auslenkbar sind. Die Auslenkbewegung wird nach außen begrenzt von jeweils einem äußeren Anschlag 24, 25 und nach innen von einem jeweils gegenüberliegenden inneren Anschlag 26, 27.

In Fig. 2b ist die Getränkesubstratkapsel 3 in der Beladeposition, d.h. in der von den Positioniermitteln 8 gebildeten Getränkekapselaufnahme, angeordnet und automatisch korrekt positioniert. Durch das Spannen der Federelemente 14, 15 werden diese in dem jeweiligen Aufnahmeabschnitt 17, 18 nach radial außen aufgeweitet, wodurch die freien Enden 21, 22 in Richtung des jeweiligen inneren Anschlags 26, 27 verstellt werden. Die so positionierte Getränkesubstratkapsel 3 kann nun durch das translatorische Verstellen des ersten Injektionskammerteils 4 in Richtung Endposition verstellt werden. Alternativ ist es möglich, dass die Federelemente 14, 15 bei aufgenommener Getränkesubstratkapsel 3 wieder soweit nach radial innen zurückfedern können, ohne die Getränkesubstratkapsel 3 federkraft zu beaufschlagen. In diesem Fall halten die Federelemente 14, 15 die Getränkesubstratkapsel 3 zwischen sich lediglich formschlüssig und kraftlos. Ein Formschluss kann dadurch realisiert werden, dass, insbesondere für den Fall des Vorsehens nur eines Federelementes 14, 15 dieses die Getränkesubstratkapsel 3 zusammen mit einer davon separaten Getränkekapselaufnahme formschlüssig halten.

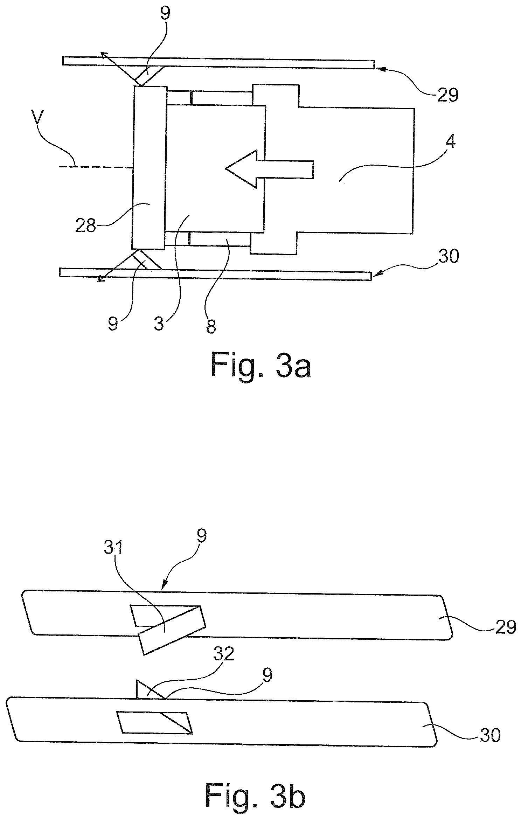

Diese Verstellbewegung ist in Fig. 3b angedeutet. Zu erkennen ist das erste Injektionskammerteil 4, welches in der Pfeilrichtung entlang der Verstellachse V verstellt wird. Dabei passiert die Getränkesubstratkapsel 3 als Ausklinkungen von Federblechen realisierte Rückhaltemittel 9, die von der Getränkesubstratkapsel 3, genauer einem radial außen vorstehenden Umfangsbund 28 nach radial außen in den jeweiligen Pfeilrichtungen ausgelenkt werden und die nach Passieren des Umfangsbundes 28 zurückschnappen.

Fig. 3b zeigt eine bevorzugte Realisierungsform der Rückhaltemittel 9. Zu erkennen sind als Stanzbiegeelemente ausgebildete Bleche 29, 30, die mit Ausklinkungen 31, 32 versehen sind, die im Stanzbiegeverfahren hergestellt sind.

In Fig. 4 befindet sich das erste Injektionskammerteil 4 entlang der Verstellachse V axial verstellt in der Endposition und die Getränkesubstratkapsel 3 ist abgedichtet gegenüber dem ersten und dem zweiten Injektionskammerteil 4, 5. Zu erkennen sind die Rückhaltemittel 9, die nach radial innen zurückverschwenkt sind. In der gezeigten, verriegelten Position der Injektionseinrichtung 2 kann nun die Wasserinjektion in an sich bekannter Weise erfolgen. Die Getränkesubstratkapsel 3 wurde in an sich bekannter Weise durch vorzugsweise als Ausstechmittel ausgebildete Öffnungsmittel beim Schließvorgang der Injektionskammer geöffnet.

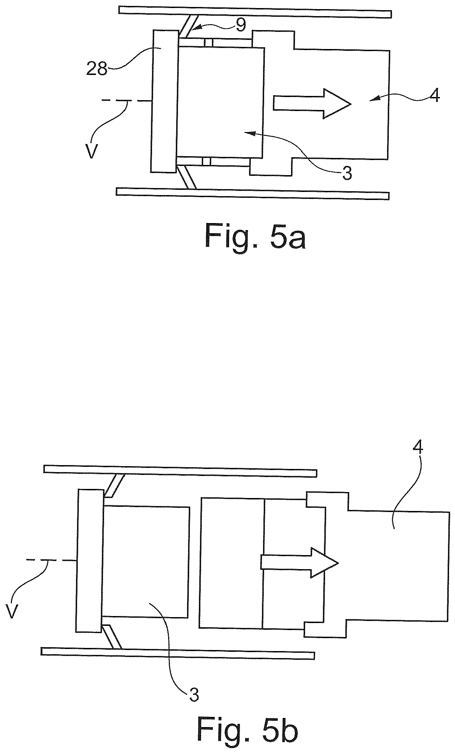

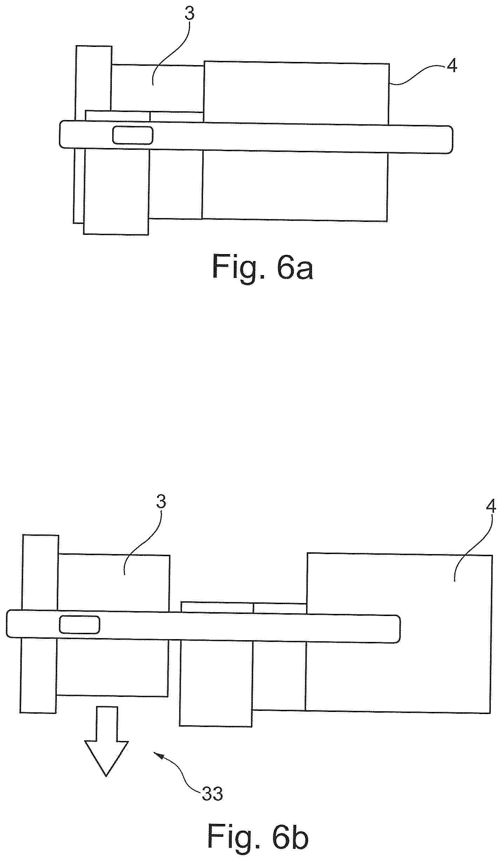

Fig. 5a zeigt nun die Zurückbewegung entlang der Verstellachse V des ersten Injektionskammerteils 4. Dabei wird die Getränkesubstratkapsel 3 zunächst ein kleines Stück weit, insbesondere nur wenige Millimeter, zusammen mit dem ersten Injektionskammerteil 4 zurückbewegt und stützt sich dann an dem im Bereich der Endposition angeordneten Rückhaltemitteln 9 ab und zwar mit dem Umfangsbund 28. Bei der in Fig. 5b gezeigten weiteren Verstellbewegung des ersten Injektionskammerteils 4 entlang der Verstellachse V wird die Getränkesubstratkapsel 3 vollständig zurückgehalten und kann dann, wie sich aus einer Zusammenschau der Fig. 6a und 6b ergibt, durch eine untere Auswurföffnung 33 nach unten herausfallen.

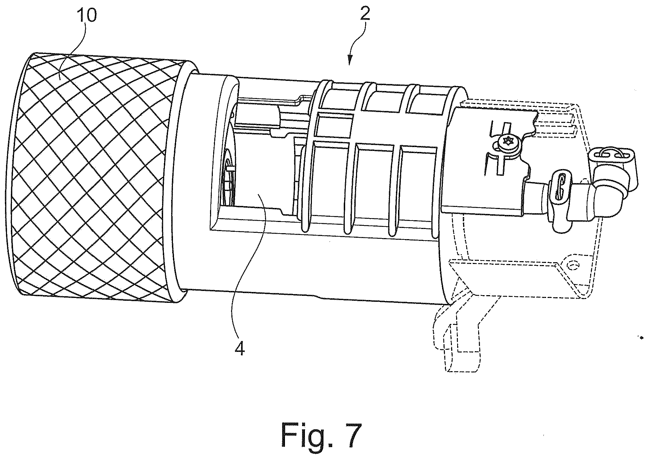

In den Fig. 7 bis 9 ist ein alternatives Ausführungsbeispiel einer Injektionseinrichtung 2 einer nach dem Konzept der Erfindung ausgebildeten Getränkezubereitungsvorrichtung in unterschiedlichen, teilweise geschnittenen Ansichten gezeigt. Zur Vermeidung von Wiederholungen wird im Folgenden im Wesentlichen auf Unterschiede zu dem vorstehend erläuterten Ausführungsbeispiel eingegangen - im Hinblick auf die Gemeinsamkeiten, insbesondere im Hinblick auf die Funktionsweise der Betätigungsmittel 10 wird auf die vorstehenden Figuren mit zugehöriger Figurenbeschreibung verwiesen.

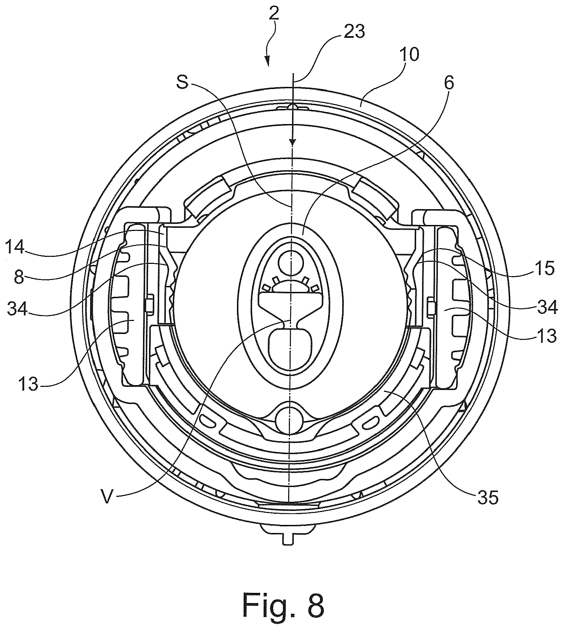

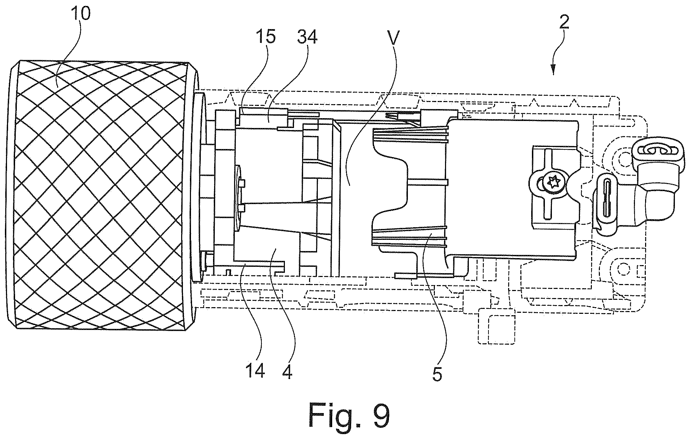

Die Injektionseinrichtung 2 umfasst ein rein translatorisch verstellbares erstes Injektionskammerteil 4, welches zu einem in Fig. 9 gezeigten ortsfesten Injektionskammerteil 5 entlang der Verstellachse translatorisch verstellbar ist, sodass in der auf das ortsfeste Injektionskammerteil 5 zu verstellen, nicht eingezeichneten Endposition Wasser in eine nicht gezeigte Getränkesubstratkapsel injizierbar ist und ein fertiges Getränk aus der Getränkesubstratkapsel ausleitbar ist. Wie bei dem zuvor beschriebenen Ausführungsbeispiel handelt es sich bei dem Ausführungsbeispiel gemäß in Fig. 7 bis 9 um eine sog. offene Injektionseinrichtung 2, bei der die Injektionskammerteile 4, 5 nicht vollumfänglich dichtend aneinander anliegen, sondern die Getränkesubstratkapseln der Endposition klemmend zwischen sich aufnehmen und gegenüber dieser abgedichtet sind, wobei dann insgesamt auf einer Oberseite eine freie Öffnung verbleibt. Eine entsprechende Dichtung 6 am ersten Injektionskammerteil ist in Fig. 8 gezeigt. Eine Getränkesubstratkapsel fällt mit der Verstellachse V des ersten Injektionskammerteils zusammen.

Um zu vermeiden, dass bei einem Einwurf der Getränkesubstratkapsel durch die freibleibende Öffnung von oben in der in Fig. 8 eingezeichneten Pfeilrichtung 23 die Kapsel wieder zurückfedert und um gleichzeitig die Kapsel korrekt zu positionieren, umfasst die Injektionseinrichtung 2 Positioniermittel 8 mit zwei einander gegenüberliegenden Federelementen 14, 15. Diese sind bezogen auf eine die Verstellachse V für das erste Injektionskammerteil 4 aufnehmende, vertikale Spiegelebene S spiegelsymmetrisch zueinander angeordnet.

Die Federelemente 14, 15 sind dabei derart ausgebildet und angeordnet, dass diese beim Einsetzen der Getränkesubstratkapsel in der Pfeilrichtung 23 in radialer Richtung bezogen auf die Verstellachse elastisch auslenkbar sind, d. h. elastisch auffedern um somit den Weg für die Getränkesubstratkapsel freizugeben. Diese Kraftbelastung spürt der Bediener und muss diese überwinden. Damit die Federelemente 14, 15 durch die Kraftbeaufschlagung mit Getränkesubstratkapsel elastisch auslenkbar sind, umfassen diese eine entsprechende nach oben bzw. entgegen der Pfeilrichtung des Pfeils 23 orientierte Anlaufschräge 34.

Aus einer Zusammenschau der Figuren 7-9 ergibt sich, dass die Federelemente 14, 15 einteilig, d. h. monolithisch ausgebildet sind und mit ihrem jeweiligen bzgl. Zeichnungsebene unteren Ende an einem Verbindungsabschnitt 35 angeordnet sind. Das die Federmittel und damit die Federelemente 14, 15 umfassende Teil ist als Anlegeteil ausgebildet und im konkreten Ausführungsbeispiel als Kunststoffspritzgussteil.

Die Federmittel, konkret die Federelemente 14, 15 sind so ausgelegt, dass diese die Getränkesubstratkapsel mantelseitig kontaktieren und zumindest beim Einlegevorgang, bei dem die Federelemente 14, 15 über die Getränkesubstratkapsel gespannt werden kraftbeaufschlagt. Je nach Auslegung der Federelemente 14, 15 kann eine solche Kraftbeaufschlagung auch noch nach dem Einlegevorgang erfolgen, wenn die Getränkesubstratkapsel 3 vollständig im ersten Injektionskammerteil 4 aufgenommen ist - in diesem Fall wird die Getränkesubstratkapsel von den Federmitteln während des gesamten Transportweges hin zum zweiten Injektionskammerteil 5 (federnd) geklemmt. Bei einer alternativen Auslegung erfolgt im eingesetzten Zustand keine Klemmung sondern die Getränkesubstratkapsel wird kraftlos, formschlüssig in ihrer Position gehalten. Jedenfalls wäre ein theoretisches Zurückbewegen der Getränkesubstratkapsel nur entgegen der Federkraft der Federelemente 14, 15 möglich, die hierzu wieder weiter elastisch ausgelenkt werden müssten.

Die maximale Auslenkung der Federelemente 14, 15 nach außen wird in den gezeigten Ausführungsbeispiel von den Führungsarmen 13 gebildeten Anschlägen begrenzt. Alternativ ist es denkbar, Anschläge in einem Bereich zwischen den Führungsarmen und den Federelementen 14, 15 anzuordnen und zwar bevorzugt am ersten Injektionskammerteil 4, um die Anschläge zusammen mit dem Injektionskammerteil axial bzw. translatorisch entlang der Verstellachse V verstellen zu können.

### Bezugszeichenliste

- 1: Getränkezubereitungsvorrichtung
- 2: Injektionseinrichtung
- 3: Getränkesubstratkapsel
- 4: erstes Injektionskammerteil
- 5: zweites Injektionskammerteil
- 6: Dichtung
- 7: Getränkekapselaufnahme
- 8: Positioniermittel, bevorzugt Kraftbeaufschlagungsmittel
- 9: Rückhaltemittel
- 10: Betätigungsmittel
- 11: Widerlager
- 12: Axialfortsätze
- 13: Führungsarme
- 14: Federelement
- 15: Federelement
- 17: Aufnahmeabschnitt
- 18: Aufnahmeabschnitt
- 19: unteres Ende
- 20: unteres Ende
- 21: freies Ende
- 22: freies Ende
- 23: Pfeil
- 24: äußerer Anschlag
- 25: äußerer Anschlag
- 26: innerer Anschlag
- 27: innerer Anschlag
- 28: Umfangsbund
- 29: Blech
- 30: Blech
- 31: Ausklinkung
- 32: Ausklinkung
- 33: Auswurföffnung
- 34: Anlaufschräge
- 35: Verbindungsabschnitt

- V: Verstellachse
- M: Mantelfläche
- S: Spiegelfläche

## Patentansprüche

1. Getränkezubereitungsvorrichtung (1) zum Herstellen von Getränken aus Getränkesubstratkapseln (3), insbesondere Kaffeekapseln, mit einer Injektionseinrichtung (2) zum Injizieren von Wasser in eine Getränkesubstratkapsel (3) zur Getränkeerzeugung und mit Wasserversorgungsmitteln zum Versorgen der Injektionseinrichtung (2) mit Wasser, wobei die Injektionseinrichtung (2) ein erstes Injektionskammerteil (4) aufweist, das, bevorzugt translatorisch, relativ zu einem, bevorzugt ortsfesten, zweiten Injektionskammerteil (5) verstellbar ist, wobei das erste Injektionskammerteil (4) eine Getränkekapselaufnahme (7) aufweist, mit der diese gemeinsam zwischen einer Beladeposition und einer Endposition verstellbar ist, und dass der Getränkekapselaufnahme (7) zusammen mit dem ersten Injektionskammerteil (4) verstellbare, Positioniermittel (8) zum definierten Positionieren einer in der Getränkekapselaufnahme (7) aufgenommenen Getränkesubstratkapsel (3) während der Verstellbewegung des ersten Injektionskammerteils (4) in Richtung Endposition zugeordnet sind, wobei die als Federmittel ausgebildeten oder Federmittel umfassenden, bevorzugt als Kraftbeaufschlagungsmittel und/oder Formschlussmittel ausgebildeten, Positioniermittel (8) derart ausgebildet und angeordnet sind, dass diese durch Einsetzen einer Getränkesubstratkapsel (3) in die Getränkekapselaufnahme (7) in der Beladeposition elastisch spannbar sind und die Getränkesubstratkapsel (3), insbesondere bis zum Erreichen der Endposition, formschlüssig halten und/oder federkraftbeaufschlagen, vorzugsweise klemmen,
**dadurch gekennzeichnet,**
**dass** die Positioniermittel (8) mindestens ein, insbesondere als Stanzbiegeteil oder als Kunststoffformteil ausgebildetes, Federelement (14, 15) aufweisen, welches einen gekrümmten Aufnahmeabschnitt (17, 18) zur zentrierenden Anlage an der Getränkesubstratkapsel (3) aufweist.

2. Getränkezubereitungsvorrichtung (1) nach Anspruch 1,
**dadurch gekennzeichnet,**
**dass** Rückhaltemittel (9) zum Zurückhalten der Getränkesubstratkapsel (3) bei einer Zurückbewegung des ersten Injektionskammerteils (4) in Richtung seiner Beladeposition vorgesehen sind, insbesondere im Bereich der Endposition.

3. Getränkezubereitungsvorrichtung (1) nach Anspruch 2,
**dadurch gekennzeichnet,**
**dass** die Rückhaltemittel (9) mindestens ein Rückhaltefederelement umfassen, welches derart ausgebildet und angeordnet ist, dass dieses durch Verstellen des ersten Injektionskammerteils (4) mit Getränkesubstratkapsel (3) aus der Beladeposition in Richtung der Endposition elastisch auslenkbar ist und nach Passieren zumindest eines Abschnitts der Getränkesubstratkapsel (3) zurückfederbar ist, bevorzugt hinter einen Radialvorsprung, insbesondere einen, vorzugsweise deckelseitigen, Umfangsbund (28) der Getränkesubstratkapsel (3) zurückfederbar ist.

4. Getränkezubereitungsvorrichtung (1) nach einem der vorhergehenden Ansprüche,
**dadurch gekennzeichnet,**
**dass** unterhalb der Rückhaltemittel (9) eine Auswurföffnung (33) angeordnet ist, durch die eine von den Rückhaltemitteln (9) zurückgehaltene Getränkesubstratkapsel (3) schwerkraftbedingt und/oder, bevorzugt mittels eines Antriebs, kraftunterstützt hindurch fallen kann.

5. Getränkezubereitungsvorrichtung (1) nach einem der vorhergehenden Ansprüche,
**dadurch gekennzeichnet,**
**dass** stationäre, bevorzugt eine Rampe aufweisende, Wechselwirkungsmittel vorgesehen sind, die derart ausgebildet und angeordnet sind, dass die Positioniermittel (8) durch Verstellen des ersten Injektionskammerteils (4) in Richtung Endposition, insbesondere beabstandet zu der Beladeposition, die Wechselwirkungsmittel derart kontaktieren, dass die Positioniermittel (8), insbesondere erst nach dem Einlegevorgang, in Richtung einer in der Getränkekapselaufnahme (7) aufgenommenen Getränkesubstratkapsel (3) verstellt und/oder kraftbeaufschlagt und die Positioniermittel (8) dadurch die Getränkesubstratkapsel (3) formschlüssig fixieren und/oder kraftbeaufschlagen, insbesondere klemmen.

6. Getränkezubereitungsvorrichtung (1) nach einem der vorhergehenden Ansprüche,
**dadurch gekennzeichnet,**
**dass** das Federelement (14, 15) als Federblech oder als Kunststofffederlasche ausgebildet ist.

7. Getränkezubereitungsvorrichtung (1) nach Anspruch 6,
**dadurch gekennzeichnet,**
**dass** das Federelement (14, 15) ein fest angeordnetes Ende und ein gegenüberliegendes freies Ende (21, 22) aufweist, welches, insbesondere senkrecht zur Längserstreckung einer Verstellachse (V) des ersten Injektionskammerteils (4), auslenkbar ist und dass den freien Ende (21. 22) mindestens ein die Auslenkbewegung begrenzender Anschlag (24 bis 27), insbesondere zwei einander gegenüberliegende Anschläge zugeordnet sind.

8. Getränkezubereitungsvorrichtung (1) nach einem der vorhergehenden Ansprüche,
**dadurch gekennzeichnet,**
**dass** die Positioniermittel (8) zwei einander gegenüberliegende, bevorzugt spiegelsymmetrisch ausgebildete und/oder angeordnete, Federelemente (14, 15), bevorzugt gemäß einem der vorhergehenden Ansprüche, aufweisen zur, insbesondere federkraftbeaufschlagten oder kraftlosen Dazwischenaufnahme einer Getränkesubstratkapsel (3).

9. Getränkezubereitungsvorrichtung (1) nach einem der vorhergehenden Ansprüche,
**dadurch gekennzeichnet,**
**dass** das erste Injektionskammerteil (4) mit seiner Getränkekapselaufnahme, bevorzugt rein translatorisch, entlang einer Verstellachse (V) zwischen der Beladeposition und der Endposition, insbesondere über eine Zwischenposition, verstellbar ist.

10. Getränkezubereitungsvorrichtung nach einem der vorhergehenden Ansprüche,
**dadurch gekennzeichnet,**
**dass** die Positioniermittel (8) insbesondere zwei Federelemente (14, 15) der Positioniermittel (8) derart ausgebildet und angeordnet sind, dass diese sich durch und/oder beim Einsetzen der Getränkesubstratkapsel (3) mantelseitig an dieser abstützen, bevorzugt aus zwei Richtungen und dabei durch das Einsetzen radial bezogen auf die Verstellachse (V) des ersten Injektorkammerteils (4) und/oder radial bezogen auf eine sich senkrecht zu einer Deckelfläche der Getränkesubstratkapsel (3) erstreckenden Längsachse der Getränkesubstratkapsel (3) elastisch auslenkbar sind.

11. System umfassend eine Getränkezubereitungsvorrichtung (1) nach einem der vorhergehenden Ansprüche und einer Getränkesubstratkapsel (3), die in der Beladeposition in die Getränkekapselaufnahme (7) unter Spannen der Federmittel der Positioniermittel (8) einlegbar und beim Verstellen des ersten Injektionskammerteils (4) von der Beladeposition in die Endposition mit den Positioniermitteln (8), bevorzugt durch Kraftbeaufschlagung, insbesondere Federkraftbeaufschlagung, und/oder formschlüssiges Halten mittels der Positioniermittel (8) positionierbar ist.

12. Verfahren zum Betreiben einer Getränkezubereitungsvorrichtung (1) nach einem der Ansprüche 1 bis 10, **gekennzeichnet durch** die Schritte:
- Einlegen einer Getränkesubstratkapsel (3) in die Getränkekapselaufnahme (7) bei in der Beladeposition befindlichem ersten Injektionskammerteil (4);
- Positionieren der Getränkesubstratkapsel (3) mittels der Positioniermittel (8), zumindest während eines Zeitabschnitts, während des Verstellens des ersten Injektionskammerteils (4) von der Beladeposition in die Endposition;
- Injektion von Wasser, insbesondere von in der Getränkezubereitungsvorrichtung (1) erwärmtem oder gekühltem Wasser, in die Getränkesubstratkapsel (3) bei in der Endposition befindlichem ersten Injektionskammerteil (4).
**dadurch** gekennzeichnet,
dass die Positioniermittel (8) **durch** Einlegen der Getränkesubstratkapsel (3) in der Beladeposition, bevorzugt in radialer Richtung bezogen auf einer Längsachse der Getränkesubstratkapsel (3) und/oder einer Verstellachse (V) des ersten Injektionskammerteils (4) gespannt werden und die Getränkesubstratkapsel (3) vorzugsweise bis zum Erreichen der Endposition, formschlüssig halten und/oder federkraftbeaufschlagen, vorzugsweise klemmen.

13. Verfahren nach Anspruch 12,
**dadurch gekennzeichnet,**
**dass** die ortsfesten Rückhaltemittel (9) durch Verstellen der Getränkesubstratkapsel (3) in die Endposition elastisch ausgelenkt werden und nach Passieren der Getränkesubstratkapsel (3) hinter einen Radialvorsprung, insbesondere einen, bevorzugt deckelseitigen, Umfangsbund (28) zurückfedern.

14. Verfahren nach Anspruch 12 oder 13,
**dadurch gekennzeichnet,**
**dass** das erste Injektionskammerteil (4), insbesondere nach Beenden der Wasserinjektion, aus der Endposition in Richtung Beladeposition zurückverstellt wird und dabei die Getränkesubstratkapsel (3), insbesondere im Bereich der Endposition, von den Rückhaltemitteln (9) zurückgehalten wird und durch die Auswurföffnung (33) hindurchfällt.

15. Verfahren nach einem der Ansprüche 12 bis 14,
**dadurch gekennzeichnet,**
**dass** die Positioniermittel (8) durch Vorbeiverstellen der Positioniermittel (8) an ortsfesten, federnden oder starren, Wechselwirkungsmitteln, insbesondere mit Abstand zur Beladeposition in Richtung Getränkesubstratkapsel (3) verstellt; auf die Getränkesubstratkapsel (3) kraftbeaufschlagt werden und/oder diese formschlüssig, ggf. kraftlos, halten.

## Claims

1. A beverage preparation device (1) for preparing beverages from beverage substrate capsules (3), in particular coffee capsules, comprising an injection device (2) for injecting water into a beverage substrate capsule (3) for preparing beverages, and comprising water supply means for supplying the injection device (2) with water, the injection device (2) having a first injection chamber part (4) which can be displaced, preferably in a translational manner, relative to a preferably fixed second injection chamber part (5), the first injection chamber part (4) having a beverage capsule reception (7) with which it can be jointly displaced between a loading position and an end position, and that positioning means (8) for a defined positioning of a beverage substrate capsule (3) received in the beverage capsule reception (7) during the displacement of the first injection chamber part (4) toward the end position are assigned to the beverage capsule reception (7), the positioning means (8) being displaceable together with the first injection chamber part (4), the positioning means (8), which are realized as or comprise spring means and are preferably configured as force-exerting means and/or form-fitting means, being configured and disposed in such a manner that, by insertion of a beverage substrate capsule (3) into the beverage capsule reception (7), they can be elastically clamped in the loading position and hold the beverage substrate capsule (3) in a form-fitting manner and/or exert a spring force on, preferably clamp, the beverage substrate capsule (3), in particular until the end position is reached,
**characterized in that**
the positioning means (8) have at least one spring element (14, 15), which is realized in particular as a punched and bent part or a molded plastic part, the spring element having a curved reception portion (17, 18) for coming into centering contact with the beverage substrate capsule (3).

2. The beverage preparation device (1) according to claim 1,
**characterized in that**
restraining means (9) for restraining the beverage substrate capsule (3) during a backward movement of the first injection chamber part (4) toward its loading position are provided, in particular in the area of the end position.

3. The beverage preparation device (1) according to claim 2,
**characterized in that**,
the restraining means (9) comprise at least one restraining spring element which is configured and disposed in such a manner that the restraining spring element is elastically deflectable by displacing the first injection chamber part (4) with a beverage substrate capsule (3) from the loading position toward the end position and that it can spring back, preferably behind a radial projection, in particular a circumferential collar (28) of the beverage substrate capsule (3) at the lid side, after passage of at least a portion of the beverage substrate capsule (3).

4. The beverage preparation device (1) according to any one of the preceding claims,
**characterized in that**
an ejection opening (33) through which a beverage substrate capsule (3) restrained by the restraining means (9) can drop due to gravity and/or in a force-assisted manner, preferably by means of a drive, is disposed below the restraining means (9).

5. The beverage preparation device (1) according to any one of the preceding claims,
**characterized in that**
stationary interaction means, which preferably have a ramp, are provided, the interaction means being configured and disposed in such a manner that by displacing the first injection chamber part (4) toward the end position, in particular at a distance from the loading position, the positioning means (8) contact the interaction means in such a manner that the positioning means (8), in particular after the insertion process, are displaced toward a beverage substrate capsule (3) received in the beverage capsule reception (7) and/or are subjected to a force, the positioning means (8) thereby fixing the beverage substrate capsule (3) in a form-fitting manner and/or exerting a force on, in particular clamping, the beverage substrate capsule (3).

6. The beverage preparation device (1) according to any one of the preceding claims,
**characterized in that**
the spring element (14, 15) is realized as a spring sheet or as a plastic spring clip.

7. The beverage preparation device (1) according to claim 6,
**characterized in that**
the spring element (14, 15) has a fixed end and an opposite free end (21, 22) which is deflectable, in particular perpendicular to the longitudinal extension of a displacement axis (V) of the first injection chamber part (4), and that a stop (24 to 27), in particular two opposing stops, limiting the deflecting movement is/are assigned to the free end (21, 22).

8. The beverage preparation device (1) according to any one of the preceding claims
**characterized in that**
the positioning means (8) have two opposing spring means (14, 15), preferably spring means (14, 15) according to any one of the preceding claims, which are preferably configured and/or disposed mirror-symmetrically, for receiving a beverage substrate capsule (3) between them, in particular by exerting a spring force or without force.

9. The beverage preparation device (1) according to any one of the preceding claims
**characterized in that**
the first injection chamber part (4) is displaceable, preferably purely translationally, together with its beverage capsule reception along an axis of displacement (V) between the loading position and the end position, in particular via an intermediate position.

10. The beverage preparation device (1) according to any one of the preceding claims
**characterized in that**
the positioning means (8), in particular two spring elements (14, 15) of the positioning means (8), are configured and disposed in such a manner that they bear on the beverage substrate capsule (3) at the wall side, preferably from two directions, by and/or during insertion of the beverage substrate capsule (3), and that, by said insertion, they are elastically deflectable in the radial direction with respect to the axis of displacement (V) of the first injection chamber part (4) and/or in the radial direction with respect to a longitudinal axis of the beverage substrate capsule (3) extending perpendicular to a lid surface of the beverage substrate capsule (3).

11. A system comprising a beverage preparation device (1) according to any one of the preceding claims and a beverage substrate capsule (3) which can be placed in the beverage capsule reception (7) in the loading position, the spring means of the positioning means (8) being clamped, and can be positioned by the positioning means (8), preferably by application of a force, in particular application of a spring force, and/or form-fitting holding by means of the positioning means (8), when the first injection chamber part (4) is being displaced from the loading position into the end position.

12. A method for operating a beverage preparation device (1) according to any one of claims 1 to 10, **characterized by** the steps of:
- placing a beverage substrate capsule (3) in the beverage capsule reception (7) when the first injection chamber part (4) is in the loading position;
- positioning the beverage substrate capsule (3) using the positioning means (8), at least during a time interval, while the first injection chamber part (4) is being displaced from the loading position into the end position;
- injecting water, in particular water heated or cooled in the beverage preparation device (1), into the beverage substrate capsule (3) when the first injection chamber part (4) is in the end position,
**characterized in that**
in the loading position, the placement of the beverage substrate capsule (3) causes the positioning means (8) to be clamped, preferably in the radial direction with respect to a longitudinal axis of the beverage substrate capsule (3) and/or an axis of displacement (V) of the first injection chamber part (4), and to hold the beverage substrate capsule (3) in a form-fitting manner and/or to exert a force on, in particular clamp, the beverage substrate capsule (3) until the end position is reached.

13. The method according to claim 12,
**characterized in that**
the fixed restraining means (9) are elastically deflected by displacing the beverage substrate capsule (3) into the end position and spring back behind a radial projection, in particular a circumferential collar (28), which is preferably disposed at the lid side, after passage of the beverage substrate capsule (3).

14. The method according to claim 12 or 13,
**characterized in that**
in particular after termination of the water injection, the first injection chamber part (4) is displaced from the end position back toward the loading position, the beverage substrate capsule (3), in particular in the area of the end position, being restrained by the restraining means (9) and dropping through the ejection opening (33).

15. The method according to any one of claims 12 to 14,
**characterized in that**
the positioning means (8) are applied to the beverage substrate capsule (3) with force and/or hold the beverage substrate capsule (3) in a form-fitting manner, potentially without force, by the positioning means (8) being displaced past fixed elastic or rigid interacting means; in particular displaced toward the beverage substrate capsule (3) at a distance to the loading position.

## Revendications

1. Dispositif de préparation de boissons (1) destiné à préparer des boissons à partir des capsules de substrat de boisson (3), notamment des capsules de café, comprenant un dispositif d'injection (2) destiné à injecter de l'eau dans une capsule de substrat de boisson (3) pour la préparation de boissons, et comprenant des moyens d'alimentation en eau destinées à alimenter le dispositif d'injection (2) en eau, le dispositif d'injection (2) ayant une première partie de chambre d'injection (4) qui est déplaçable, de préférence par translation, par rapport à une deuxième partie de chambre d'injection (5), de préférence fixe, la première partie de chambre d'injection (4) ayant un logement de capsule de boisson (7) avec lequel elle est déplaçable entre une position de chargement et une position finale, et en ce que des moyens de positionnement (8) pour le positionnement défini d'une capsule de substrat de boisson (3) logée dans le logement de capsule de boisson (7) pendant le déplacement de la première partie de chambre d'injection (4) vers la position finale sont assignés au logement de capsule de boisson (7), les moyens de positionnement (8) étant déplaçables conjointement avec la première partie de chambre d'injection (4), les moyens de positionnement (8), qui sont réalisés comme ou comprennent des moyens de ressort et sont configurés, de préférence, comme des moyens d'application de force et/ou des moyens de liaison par forme, étant configurés et disposés de telle manière que, par insertion d'une capsule de substrat de boisson (3) dans le logement de capsule de boisson (7), ils sont élastiquement serrables dans la position de chargement et qu'ils tiennent la capsule de substrat de boisson (3) par liaison de forme et/ou appliquent une force de ressort sur ou, de préférence, serrent la capsule de substrat de boisson (3), notamment jusqu'à ce que la position finale est atteinte,
**caractérisé en ce que**
les moyens de positionnement (8) ont au moins un élément de ressort (14, 15), qui est réalisé notamment comme pièce poinçonnée et pliée ou pièce en matière plastique moulée, l'élément de ressort ayant une partie de logement (17, 18) courbée pour venir en contact centrant avec la capsule de substrat de boisson (3).

2. Dispositif de préparation de boissons (1) selon la revendication 1, **caractérisé en ce que**
des moyens de retenue (9) pour retenir la capsule de substrat de boisson (3) pendant un mouvement arrière de la première partie de chambre d'injection (4) vers sa position de chargement sont fournis, notamment dans la région de la position finale.

3. Dispositif de préparation de boissons (1) selon la revendication 2, **caractérisé en ce que**,
les moyens de retenue (9) comprennent au moins un élément de ressort de retenue qui est configuré et disposé de telle manière qu'il est élastiquement détournable en déplaçant la première partie de chambre d'injection (4) conjointement avec la capsule de substrat de boisson (3) de la position de chargement vers la position finale et qu'il peut retourner, de préférence derrière une projection radiale, notamment une collerette circonférentielle (28) de préférence du côté du couvercle de la capsule de substrat de boisson (3), après le passage d'au moins une partie de la capsule de substrat de boisson (3).

4. Dispositif de préparation de boissons (1) selon l'une quelconque des revendications précédentes,
**caractérisé en ce**
**qu'**une ouverture d'éjection (33) à travers laquelle la capsule de substrat de boisson (3) retenue par les the moyens de retenue (9) peut tomber par gravité et/ou de manière assistée par une force, de préférence par un entraînement, est disposée au-dessous des moyens de retenue (9).

5. Dispositif de préparation de boissons (1) selon l'une quelconque des revendications précédentes,
**caractérisé en ce que**
des moyens d'interaction stationnaires, de préférence ayant une rampe, sont prévus, les moyens d'interaction étant configurés et disposés de telle manière qu'en déplaçant la première partie de chambre d'injection (4) vers la position finale, notamment à distance de la position de chargement, les moyens de positionnement (8) viennent en contact avec les moyens d'interaction de telle manière que les moyens de positionnement (8), notamment après le processus d'insertion, sont déplacés vers une capsule de substrat de boisson (3) logée dans le logement de capsule de boisson (7) et/ou sont soumis à une force, les moyens de positionnement (8) ainsi fixant la capsule de substrat de boisson (3) par liaison de forme et/ou appliquant une force sur, notamment serrant, la capsule de substrat de boisson (3).

6. Dispositif de préparation de boissons (1) selon l'une quelconque des revendications précédentes,
**caractérisé en ce que**
l'élément de ressort (14, 15) est réalise comme une tôle élastique ou comme une languette élastique en matière plastique.

7. Dispositif de préparation de boissons (1) selon la revendication 6, **caractérisé en ce que**
l'élément de ressort (14, 15) a une extrémité fixe et une extrémité libre (21, 22) opposée qui est détournable, notamment perpendiculairement à l'extension longitudinale d'un axe de déplacement (V) de la première partie de chambre d'injection (4), et qu'une butée (24 à 27), notamment deux butées opposées, limitant le mouvement de détour est/sont assignée(s) à l'extrémité libre (21, 22).

8. Dispositif de préparation de boissons (1) selon l'une quelconque des revendications précédentes
**caractérisé en ce que**
les moyens de positionnement (8) ont deux éléments de ressort (14, 15) opposés, de préférence selon l'une quelconque des revendications précédentes, qui sont, de préférence, configurés et/ou disposé de manière symétrique, pour recevoir une capsule de substrat de boisson (3) entre eux, notamment en appliquant une force de ressort ou sans force.

9. Dispositif de préparation de boissons (1) selon l'une quelconque des revendications précédentes
**caractérisé en ce que**
la première partie de chambre d'injection (4) est déplaçable conjointement avec son logement de capsule de boisson, de préférence exclusivement en translation, le long d'un axe de déplacement (V) entre la position de chargement et la position finale, notamment par une position intermédiaire.

10. Dispositif de préparation de boissons (1) selon l'une quelconque des revendications précédentes
**caractérisé en ce que**
les moyens de positionnement (8), notamment deux éléments de ressort (14, 15) des moyens de positionnement (8), sont configurés et disposés de telle manière qu'il s'appuient sur la capsule de substrat de boisson (3) du côté de la paroi, de préférence depuis deux directions, par et/ou pendant l'insertion de la capsule de substrat de boisson (3), et **en ce que**, par ladite insertion, ils sont élastiquement détournables dans la direction radiale par rapport à l'axe de déplacement (V) de la première partie de chambre d'injection (4) et/ou dans la direction radiale par rapport à un axe longitudinal de la capsule de substrat de boisson (3) s'étendant perpendiculairement à une surface de couvercle de la capsule de substrat de boisson (3).

11. Système comprenant un dispositif de préparation de boissons (1) selon l'une quelconque des revendications précédentes et une capsule de substrat de boisson (3) qui, dans la position de chargement, est déplaçable dans le logement de capsule de boisson (7), les moyens de ressort des moyens de positionnement (8) étant serrés, et positionnable par les moyens de positionnement (8), de préférence par application d'une force, notamment par application d'une force de ressort, et/ou par tenu par liaison de forme par les moyens de positionnement (8), pendant que la première partie de chambre d'injection (4) est déplacée de la position de chargement dans la position finale.

12. Procédé de fonctionnement d'un dispositif de préparation de boissons (1) selon l'une quelconque des revendications 1 à 10, **caractérisé par** les étapes consistant à :
- insérer une capsule de substrat de boisson (3) dans le logement de capsule de boisson (7) lorsque la première partie de chambre d'injection (4) est dans la position de chargement ;
- positionner la capsule de substrat de boisson (3) en utilisant les moyens de positionnement (8), au moins pendant un intervalle de temps, pendant que la première partie de chambre d'injection (4) est déplacée de la position de chargement dans la position finale ;
- injecter de l'eau, notamment de l'eau chauffée ou refroidie dans le dispositif de préparation de boissons (1), dans la capsule de substrat de boisson (3) lorsque la première partie de chambre d'injection (4) est dans la position finale,
**caractérisé en ce que**
par l'insertion de la capsule de substrat de boisson (3) dans la position de chargement, les moyens de positionnement (8) sont serrés, de préférence dans la direction radiale par rapport à un axe longitudinal de la capsule de substrat de boisson (3) et/ou un axe de déplacement (V) de la première partie de chambre d'injection (4), et ils tiennent la capsule de substrat de boisson (3) par liaison de forme et/ou appliquent une force sur, , de préférence serrent, la capsule de substrat de boisson (3) jusqu'à ce que la position finale est atteinte.

13. Procédé selon la revendication 12,
**caractérisé en ce que**
les moyens de retenue (9) fixes sont élastiquement détournés par le déplacement de la capsule de substrat de boisson (3) dans la position finale et retournent derrière une projection radiale, notamment une collerette circonférentielle (28) de préférence du côté du couvercle, après le passage de la capsule de substrat de boisson (3).

14. Procédé selon la revendication 12 ou 13,
**caractérisé en ce que**
notamment après le fin de l'injection de l'eau, la première partie de chambre d'injection (4) est retournée de la position finale vers la position de chargement, la capsule de substrat de boisson (3), notamment dans la région de la position finale, étant retenue par les moyens de retenue (9) et tombant à travers l'ouverture d'éjection (33).

15. Procédé selon l'une quelconque des revendications 12 à 14, **caractérisé en ce que**
les moyens de positionnement (8) sont appliqués à la capsule de substrat de boisson (3) par force et/ou tiennent la capsule de substrat de boisson (3) par liaison de forme, éventuellement sans force, par le déplacement des moyens de positionnement (8) à coté des moyens d'interaction élastiques ou rigides fixes ; notamment déplacés vers la capsule de substrat de boisson (3) à distance de la position de chargement.
